# EUROPEAN PATENT APPLICATION

(11) **EP 4 675 763 A1**
(43) Date of publication of application: **07.01.2026**
(21) Application number: 25178125.8
(22) Date of filing: 22.05.2025
(51) Int. Cl.: H01M 10/613, H01M 50/209, H01M 50/231, H01M 50/271, H01M 50/282

(54) **POWER STORAGE DEVICE**

(30) Priority: 04.07.2024 JP 2024108159
(71) Applicant: TOYOTA JIDOSHA KABUSHIKI KAISHA, Toyota-shi, Aichi-ken 471-8571 (JP)
(72) Inventor: INOUE, Shigeyuki, Aichi-ken, 471-8571 (JP); SUGIE, Kazuki, Aichi-ken, 471-8571 (JP); KUMAZAWA, Kazuya, Aichi-ken, 471-8571 (JP)
(74) Representative: TBK

(57) **Abstract**

A power storage device (10) includes: at least one power storage cell (100); an upper cover (220) disposed above the at least one power storage cell (100); a cooler (300) that cools the at least one power storage cell, the cooler (300) being disposed on an upper surface of the upper cover; and a cover (400) that covers the at least one power storage cell, the cover (400) being disposed between the at least one power storage cell and the upper cover.

## Description

### CROSS REFERENCE TO RELATED APPLICATIONS

This nonprovisional application is based on Japanese Patent Application No. 2024-108159 filed on July 4, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2022-525014 discloses a power battery pack including a plurality of cells and a housing device. A module top plate having a cooling structure is disposed on upper surfaces of the plurality of cells.

### SUMMARY

In the power battery pack disclosed in Japanese National Patent Publication No. 2022-525014, there is a concern that, when dew condensation occurs on the module top plate, water droplets therefrom may come into contact with an external terminal of each cell and thereby cause a short circuit.

An object of the present disclosure is to provide a power storage device capable of suppressing occurrence of a short circuit resulting from dew condensation occurring on an upper cover.

A power storage device according to one aspect of the present disclosure includes: at least one power storage cell; an upper cover disposed above the at least one power storage cell; a cooler that cools the at least one power storage cell, the cooler being disposed on an upper surface of the upper cover; and a cover that covers the at least one power storage cell, the cover being disposed between the at least one power storage cell and the upper cover.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is a diagram schematically showing a vehicle including a power storage device in one embodiment of the present disclosure.
Fig. 2 is a perspective view schematically showing the power storage device and a frame member.
Fig. 3 is a cross-sectional view taken along a line III-III in Fig. 2.
Fig. 4 is a cross-sectional view taken along a line IV-IV in Fig. 3.
Fig. 5 is a cross-sectional view showing a modification of a cover.

### DESCRIPTION OF THE PREFERRED EMBODIMENTS

An embodiment of the present disclosure will be hereinafter described with reference to the accompanying drawings. In the drawings referred to below, the same or corresponding members are denoted by the same reference characters.

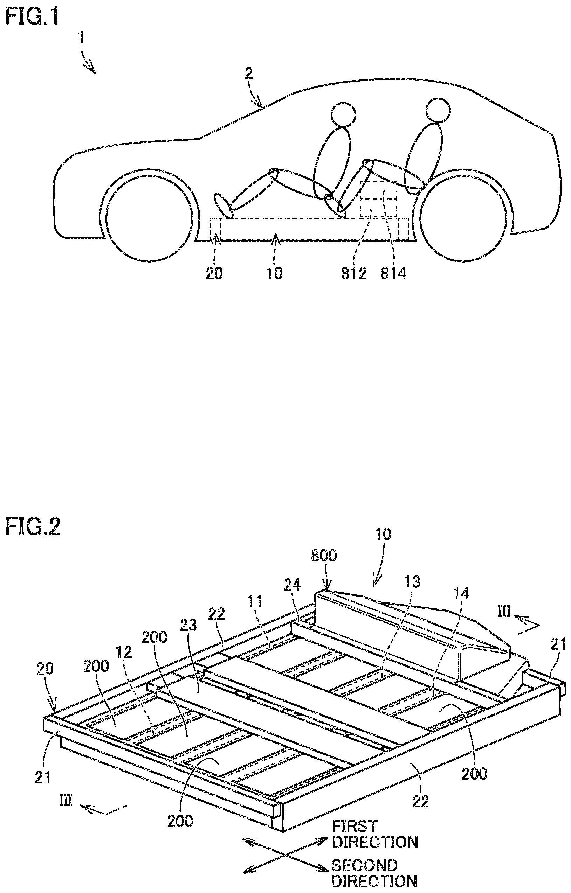

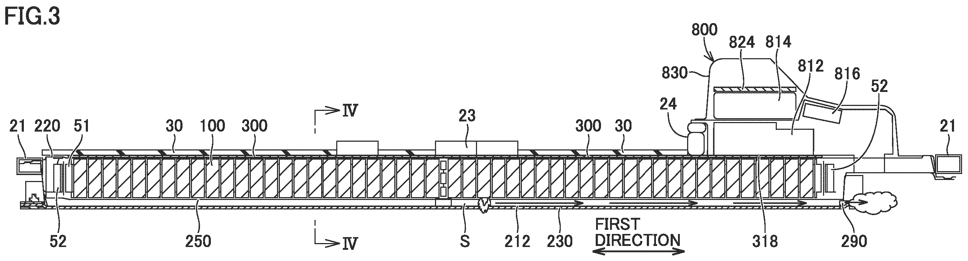

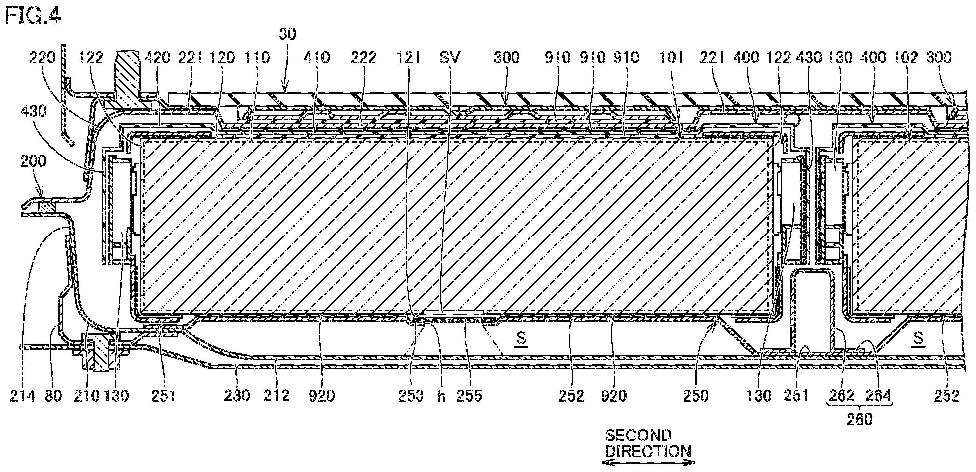

Fig. 1 is a diagram schematically showing a vehicle including a power storage device in one embodiment of the present disclosure. Fig. 2 is a perspective view schematically showing the power storage device and a frame member. Fig. 3 is a cross-sectional view taken along a line III-III in Fig. 2. Fig. 4 is a cross-sectional view taken along a line IV-IV in Fig. 3.

As shown in Fig. 1, a vehicle 1 includes a vehicle body 2 and a power storage device 10. Examples of vehicle 1 include a hybrid electric vehicle, a plug-in hybrid electric vehicle, and a battery electric vehicle.

As shown in Figs. 1 and 2, vehicle body 2 includes a frame member 20. Frame member 20 is disposed on a bottom portion of vehicle body 2. Frame member 20 includes a pair of first frames 21, a pair of second frames 22, a first cross frame 23, and a second cross frame 24.

The pair of first frames 21 face each other in a first direction. Each first frame 21 is shaped to extend in a second direction orthogonal to both the first direction and an upward-downward direction. For example, the first direction may be parallel to a front-rear direction of vehicle 1, and the second direction may be parallel to a left-right direction (a width direction) of vehicle 1.

The pair of second frames 22 face each other in the second direction. Each second frame 22 is shaped to extend in the first direction. An end portion of each second frame 22 in the first direction is connected to first frame 21. The pair of second frames 22 are arranged in a substantially quadrangular cylindrical shape together with the pair of first frames 21 to surround power storage device 10.

First cross frame 23 is disposed between the pair of first frames 21 and couples the pair of second frames 22 to each other.

Second cross frame 24 is disposed between the pair of first frames 21 and couples the pair of second frames 22 to each other. Second cross frame 24 is spaced apart from first cross frame 23 in the first direction. Each of first cross frame 23 and second cross frame 24 forms, for example, a seat cross.

Power storage device 10 is attached to frame member 20. As shown in Fig. 2, power storage device 10 is disposed below first cross frame 23 and second cross frame 24. As shown in Figs. 1 to 4, power storage device 10 includes four power storage stacks 11 to 14, a housing 200, a cooler 300, a cover 400, and a device unit 800. The number of power storage stacks is not limited to four.

Each of power storage stacks 11 to 14 includes at least one power storage cell 100. In the present embodiment, each of power storage stacks 11 to 14 includes a plurality of (for example, fifty) power storage cells 100 arranged side by side in the first direction. Each of power storage stacks 11 to 14 is formed in a rectangular parallelepiped shape elongated in the first direction. As shown in Fig. 2, four power storage stacks 11 to 14 are arranged side by side in the second direction.

As shown in Fig. 3, a pair of end plates 51 that sandwich the plurality of power storage cells 100 from both sides in the first direction are provided on both sides of the plurality of power storage cells 100 in the first direction. A monitoring unit (smart battery management) 52 is disposed outside each end plate 51 in the first direction.

As shown in Fig. 4, each power storage cell 100 includes an electrode assembly 110, a cell case 120, and a pair of external terminals 130.

Electrode assembly 110 may be formed of a wound body implemented by winding a positive electrode sheet and a negative electrode sheet with a separator being interposed therebetween, or may be formed of a stacked body implemented by stacking a positive electrode sheet and a negative electrode sheet with a separator being interposed therebetween. Electrode assembly 110 is formed in a shape elongated in the second direction.

Cell case 120 accommodates electrode assembly 110. Cell case 120 is formed in a rectangular parallelepiped shape. Cell case 120 is made of metal such as aluminum. Cell case 120 has a lower surface 121 provided with a safety valve SV. Fig. 4 shows a two-dot chain line indicating the discharge direction of the gas that can be discharged from safety valve SV.

The pair of external terminals 130 are provided on respective side surfaces 122 of cell case 120 in the width direction orthogonal to both the upward-downward direction and a thickness direction of cell case 120. One of the pair of external terminals 130 protrudes in the width direction from one side surface 122 of cell case 120 in the width direction. The other of the pair of external terminals 130 protrudes in the width direction from the other side surface 122 of cell case 120 in the width direction. The width direction corresponds to the second direction.

Housing 200 accommodates at least one power storage cell 100. In the present embodiment, housing 200 accommodates four power storage stacks 11 to 14. As shown in Fig. 4, housing 200 includes a lower case 210, an upper cover 220, a panel member 230, a spacer member 250, and a cross member 260.

Lower case 210 is opened upward. Lower case 210 has a bottom surface 212 and a peripheral wall 214.

Bottom surface 212 is located below each of power storage stacks 11 to 14. Bottom surface 212 may be formed in a flat plate shape.

Peripheral wall 214 rises from a peripheral edge portion of bottom surface 212. Peripheral wall 214 is shaped to surround lower portions of power storage stacks 11 to 14.

Upper cover 220 is disposed above at least one power storage cell 100. In the present embodiment, upper cover 220 is disposed above four power storage stacks 11 to 14. Together with lower case 210, upper cover 220 accommodates four power storage stacks 11 to 14. Specifically, together with lower case 210, upper cover 220 accommodates four power storage stacks 11 to 14 in a hermetically sealed state. Upper cover 220 has a peripheral edge portion connected to a peripheral edge portion of lower case 210 with bolts or the like with a seal member being interposed therebetween.

Upper cover 220 has a top portion 221 and four recess portions 222.

Top portion 221 is formed to be flat. Top portion 221 overlaps, in the upward-downward direction, with an end portion of each power storage stack in the second direction.

Each recess portion 222 is recessed downward from top portion 221. Each recess portion 222 is formed to be flat. Each recess portion 222 is formed above a central portion of each of power storage stacks 11 to 14 in the second direction. As shown in Fig. 4, each recess portion 222 is shorter in the second direction than power storage cell 100. Each recess portion 222 is in contact with an upper surface of cell case 120 with a thermally conductive adhesive 910 being interposed therebetween.

Panel member 230 is provided below lower case 210. Panel member 230 has a function of protecting lower case 210. Panel member 230 may be formed in a flat plate shape. As shown in Fig. 4, panel member 230 has a peripheral edge portion connected to lower case 210 through a bracket 80.

Spacer member 250 provides a space S together with bottom surface 212 of lower case 210. Spacer member 250 is provided between bottom surface 212 of lower case 210 and at least one power storage cell 100. Specifically, spacer member 250 is provided between bottom surface 212 and each of power storage stacks 11 to 14. In other words, in the present embodiment, four spaces S are provided inside housing 200.

Each space S functions as a smoke discharge path (hereinafter referred to as a "smoke discharge path S"). Smoke discharge path S serves as a path through which the gas discharged from safety valve SV is discharged to the outside of housing 200. Each smoke discharge path S is connected to a common space inside housing 200 at an end portion of smoke discharge path S in the first direction.

As shown in Fig. 4, spacer member 250 has a through hole h provided below safety valve SV. When gas is discharged from safety valve SV of power storage cell 100, the gas flows into smoke discharge path S through the through hole h. **In the** present embodiment, through hole h is provided in a portion facing each safety valve SV.

As shown in Fig. 3, an explosion-proof valve 290 is provided in a portion of peripheral wall 214 that faces smoke discharge path S in the first direction. Explosion-proof valve 290 is provided in the above-mentioned common space inside housing 200. Explosion-proof valve 290 releases the pressure inside housing 200. Explosion-proof valve 290 opens when the pressure inside housing 200 becomes equal to or higher than a reference value. Explosion-proof valve 290 is formed of a check valve. As shown in Fig. 3, when gas is discharged from one of power storage cells 100, the gas spreads in the first direction through smoke discharge path S and is discharged to the outside of housing 200 through explosion-proof valve 290.

As shown in Fig. 4, spacer member 250 includes a base portion 251 and a support portion 252.

Base portion 251 is connected to bottom surface 212 of lower case 210 by welding or the like. Base portion 251 is formed to be flat. Base portion 251 extends in the first direction.

Support portion 252 protrudes from base portion 251. Support portion 252 supports the plurality of power storage cells 100 in each power storage stack. Support portion 252 supports the plurality of power storage cells 100 with an adhesive member 920 being interposed therebetween.

Support portion 252 is provided with a mount portion 253. As shown in Fig. 4, mount portion 253 is recessed downward from support portion 252. Through hole h is provided in a portion of mount portion 253 that faces safety valve SV.

As shown in Fig. 4, a heat insulation plate 255 may be placed on mount portion 253. Heat insulation plate 255 is provided between each through hole h of spacer member 250 and safety valve SV of power storage cell 100. Each heat insulation plate 255 is made, for example, of mica obtained by hardening a natural inorganic mineral through heat pressing. Each heat insulation plate 255 is shaped to cover through hole h. A notch may be provided in a portion of each heat insulation plate 255 that overlaps with an edge portion of through hole h. Note that heat insulation plate 255 may be attached to lower surface 121 of cell case 120 so as to cover safety valve SV.

Cross member 260 is connected by welding or the like to a portion of base portion 251 that is located between a pair of power storage stacks adjacent to each other. For example, Fig. 4 shows cross member 260 connected to base portion 251 provided in a portion between a plurality of first power storage cells 101 (see Fig. 4) included in power storage stack 11 disposed on the outermost side in the second direction and a plurality of second power storage cells 102 (see Fig. 4) included in power storage stack 12 adjacent to power storage stack 11. Cross member 260 extends in the first direction. Cross member 260 is connected to peripheral wall 214. Cross member 260 may be connected to the pair of first frames 21 through brackets (not shown).

As shown in Fig. 4, cross member 260 has a reinforcement portion 262 and a connection bottom surface 264.

Reinforcement portion 262 is shaped to protrude in a direction away from base portion 251. Reinforcement portion 262 is disposed below external terminal 130 of power storage cell 100. Reinforcement portion 262 overlaps in the upward-downward direction with both the pair of external terminals 130 facing each other in the second direction.

Connection bottom surface 264 extends outward in the second direction from a lower end portion of reinforcement portion 262. Connection bottom surface 264 is connected to base portion 251 by welding or the like. Connection bottom surface 264 is formed to be flat.

Cooler 300 cools at least one power storage cell 100. As shown in Figs. 3 and 4, cooler 300 is disposed on an upper surface of upper cover 220. Cooler 300 is in thermal contact with at least one power storage cell 100 with upper cover 220 being interposed therebetween. In the present embodiment, cooler 300 cools each of power storage stacks 11 to 14 through upper cover 220. A cooling medium (water or the like) flows through cooler 300. Note that the state of being in thermal contact includes the state in which cooler 300 is in indirect contact with power storage cell 100 with a thermally conductive member (an adhesive, a fixing member, or the like) being interposed therebetween.

As shown in Figs. 3 and 4, cooler 300 forms at least a part of a floor portion 30 of a vehicle cabin. Floor portion 30 of the vehicle cabin may include, in addition to cooler 300, a shock absorbing member, a carpet, and the like disposed on cooler 300. Fig. 2 does not show such a shock absorbing member, a carpet, and the like.

Cover 400 is disposed between at least one power storage cell 100 and upper cover 220 to cover at least one power storage cell 100. In the present embodiment, cover 400 covers power storage stacks 11 to 14. Cover 400 extends from one end to the other end of each of power storage stacks 11 to 14 in the first direction. Cover 400 covers the upper side of both cell case 120 and external terminal 130. Cover 400 is made of an insulating material (a synthetic resin or the like).

As shown in Fig. 4, cover 400 has an interposed portion 410, an extending portion 420, and a facing portion 430.

Interposed portion 410 is interposed between recess portion 222 of upper cover 220 and an upper surface of cell case 120. Interposed portion 410 is formed to be flat. Thermally conductive adhesive 910 is provided between interposed portion 410 and recess portion 222 and between interposed portion 410 and the upper surface of cell case 120. Thus, cooler 300 is in thermal contact with the upper surface of cell case 120 with recess portion 222, interposed portion 410, and thermally conductive adhesive 910 being interposed therebetween. Interposed portion 410 may be formed to have a thickness equal to or smaller than the thickness of recess portion 222.

Extending portion 420 protrudes from interposed portion 410 in the second direction. Extending portion 420 is disposed below top portion 221.

Facing portion 430 faces external terminal 130 in the second direction. Facing portion 430 extends downward from an outer end portion of extending portion 420 in the second direction.

Device unit 800 is disposed, for example, at an end portion in the first direction. In the present embodiment, device unit 800 is disposed on a rear portion of upper cover 220 in the front-rear direction of vehicle 1. Device unit 800 includes a junction box 812, an electricity supply unit 814, an electronic control unit 816, a unit cooler 824, and a device cover 830.

Junction box 812 is disposed above upper cover 220. Junction box 812 accommodates relays, fuses, and the like.

As shown in Fig. 3, cooler 300 includes an interposed portion 318 interposed between upper cover 220 and junction box 812. Junction box 812 is cooled by interposed portion 318.

Electricity supply unit 814 is disposed above junction box 812. Electricity supply unit 814 is cooled by unit cooler 824 disposed on electricity supply unit 814.

Electronic control unit 816 is disposed above junction box 812.

Device cover 830 accommodates junction box 812, electricity supply unit 814, electronic control unit 816, and unit cooler 824.

In power storage device 10 described above, when gas is discharged downward from safety valve SV due to a short circuit or the like in any one of power storage cells 100, the gas breaks heat insulation plate 255 and flows into smoke discharge path S through the through hole h of spacer member 250. Thus, the contents (what is called debris) of power storage cell 100 that are contained in the gas are suppressed from adhering to external terminal 130 and the like of power storage cell 100.

The gas having flowed into smoke discharge path S spreads in the first direction and then is discharged from housing 200 through explosion-proof valve 290 as shown in Fig. 3. In this case, heat insulation plate 255 closes each through hole h positioned to face safety valve SV of each of other power storage cells 100 different from power storage cell 100 from which the gas has been discharged. Thereby, the gas spreading through smoke discharge path S is suppressed from coming into contact with lower surface 121 of each of these other power storage cells 100. Therefore, each power storage cell 100 other than power storage cell 100 from which gas has been discharged is suppressed from being heated by the gas.

Further, power storage device 10 includes cover 400 that covers power storage cell 100. Thus, even when dew condensation water is generated on the inner surface of upper cover 220, contact of the dew condensation water with power storage cell 100 and occurrence of a short circuit caused thereby are suppressed.

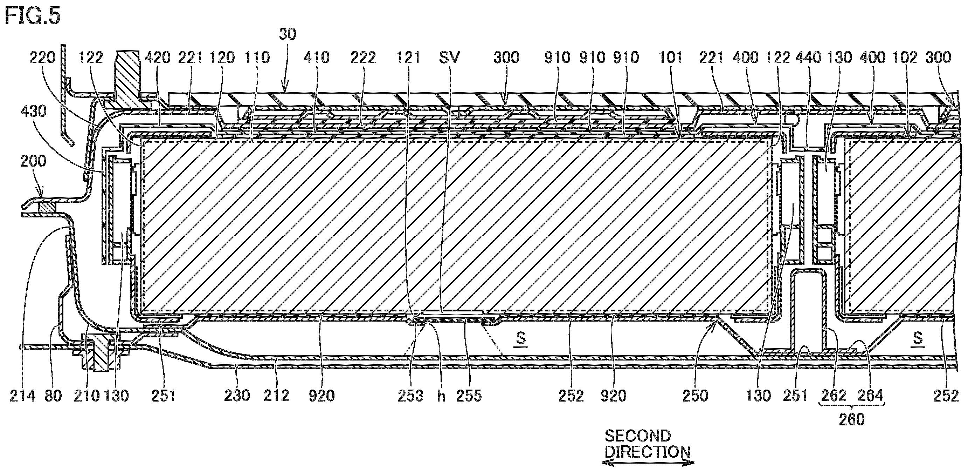

As shown in Fig. 5, cover 400 may include a coupling portion 440. The coupling portion couples a pair of extending portions 420 adjacent to each other in the second direction. Coupling portion 440 covers the pair of external terminals 130 adjacent to each other in the second direction. In the present aspect, a single cover 400 covers four power storage stacks 11 to 14.

It will be understood by those skilled in the art that the above-described exemplary embodiment is a specific example of the following aspects.

### [Aspect 1]

A power storage device including:
at least one power storage cell;
an upper cover disposed above the at least one power storage cell;
a cooler that cools the at least one power storage cell, the cooler being disposed on an upper surface of the upper cover; and
a cover that covers the at least one power storage cell, the cover being disposed between the at least one power storage cell and the upper cover.

The present power storage device includes the cover that covers the power storage cell. Thus, even when dew condensation water is generated on the inner surface of the upper cover, contact of the dew condensation water with the power storage cell and occurrence of a short circuit caused thereby are suppressed.

### [Aspect 2]

The power storage device according to Aspect 1, wherein
the at least one power storage cell includes
   an electrode assembly,
   a cell case that accommodates the electrode assembly, and
   an external terminal that protrudes from the cell case in a direction orthogonal to both an upward-downward direction and a thickness direction of the cell case, and
the cover covers an upper side of both the cell case and the external terminal.
In the present aspect, the power storage cell is reduced in dimension in the upward-downward direction, and the dew condensation water is suppressed from reaching the external terminal.

### [Aspect 3]

The power storage device according to Aspect 2, further including a thermally conductive adhesive provided between the cover and the upper cover and between the cover and an upper surface of the cell case.

In the present aspect, the position of the cover relative to the power storage cell and the upper cover is effectively determined, and further, the thermal contact between the cooler and the power storage cell is effectively ensured.

### [Aspect 4]

The power storage device according to any one of Aspects 1 to 3, wherein the cover is made of an insulating material.

Although the embodiment of the present disclosure has been described, it should be understood that the embodiment disclosed herein is illustrative and non-restrictive in every respect. The scope of the present disclosure is defined by the terms of the claims, and is intended to include any modifications within the scope and meaning equivalent to the terms of the claims.

## Claims

1. A power storage device (10) comprising:
at least one power storage cell (100);
an upper cover (220) disposed above the at least one power storage cell (100);
a cooler (300) that cools the at least one power storage cell (100), the cooler (300) being disposed on an upper surface of the upper cover (220); and
a cover (400) that covers the at least one power storage cell (100), the cover (400) being disposed between the at least one power storage cell (100) and the upper cover (220).

2. The power storage device (10) according to claim 1, wherein
the at least one power storage cell (100) includes
an electrode assembly (110),
a cell case (120) that accommodates the electrode assembly (110), and
an external terminal (130) that protrudes from the cell case (120) in a direction orthogonal to both an upward-downward direction and a thickness direction of the cell case (120), and
the cover (400) covers an upper side of both the cell case (120) and the external terminal (130).

3. The power storage device (10) according to claim 2, further comprising a thermally conductive adhesive (910) provided between the cover (400) and the upper cover (220) and between the cover (400) and an upper surface of the cell case (120).

4. The power storage device (10) according to any one of claims 1 to 3, wherein the cover (400) is made of an insulating material.
